# EUROPEAN PATENT APPLICATION

(11) **EP 4 535 914 A1**
(43) Date of publication of application: **09.04.2025**
(21) Application number: 23811173.6
(22) Date of filing: 26.05.2023
(51) Int. Cl.: H04W 74/08

(54) **INFORMATION PROCESSING METHOD AND RELATED APPARATUS**

(30) Priority: 27.05.2022 CN 202210588290
(71) Applicant: Spreadtrum Communications (Shanghai) Co., Ltd., Shanghai 201203 (CN)
(72) Inventor: CHEN, Xiaoyu, Shanghai 201203 (CN); HAN, Lifeng, Shanghai 201203 (CN)
(74) Representative: Mewburn Ellis LLP
(86) International application number: PCT/CN2023/096508
(87) International publication number: WO 2023/227103

(57) **Abstract**

Disclosed are an information processing method and a related device. In the method, a UE sends first information about random access (RA), wherein the first information indicates one or more parameters of a feature combination requested by the RA initiated by a user equipment (UE). With the present disclosure, it is beneficial for a network device to optimize a network by using the parameter of the feature combination.

## Description

### CROSS-REFERENCE TO RELATED APPLICATION(S)

This application claims priority to Chinese Patent Application No. 2022105882900, filed with the Chinese Patent Office on May 27, 2022 and entitled "INFORMATION PROCESSING METHOD AND RELATED APPARATUS", which is incorporated herein by reference in its entirety.

### TECHNICAL FILD

This disclosure relates to the field of communications technologies, and in particular, to an information processing method and a related apparatus.

### BACKGROUND

A variety of new features are introduced into a communication network to enhance network performance, such as coverage enhancement, network slice, small data transmission (SDT), etc. These new features also put forward new requirements for random access (RA) procedure, and therefore, with respect to various new features, how to further optimize a network is a problem to be solved.

### SUMMARY

An information processing method and a related apparatus are provided in embodiments of the present disclosure.

In the first aspect, an information processing method is provided in embodiments of the present disclosure. The method is described from the perspective of a user equipment (UE) or a related apparatus in the UE. The method includes the following. First information about random access (RA) is sent, where the first information indicates one or more parameters of a feature combination requested by the RA initiated by a user equipment (UE).

By means of this method, the parameter of the feature combination of the RA is reported, thus facilitating a network device to further optimize a network based on the reported parameter of the feature combination of the RA.

In an optional embodiment, before the first information about the RA is sent, the method further includes recording the first information about the RA.

In an optional embodiment, the first information includes second information; and the second information indicates the feature combination requested by the RA initiated by the UE. In this embodiment, it is beneficial for the network device to learn the feature combination requested by the RA, thereby allowing the network device to optimize the RA according to the feature combination requested by the RA, which in turn further enhances the utilization rate of network resources.

In an optional embodiment, the first information further includes third information, and the third information indicates one or more random access channel (RACH) parameters corresponding to the feature combination requested by the RA. In this embodiment, it is beneficial for the network device to learn the one or more RACH parameters corresponding to the feature combination requested by the RA, thereby adjusting the one or more RACH parameters to optimize the network.

In an optional embodiment, the one or more RACH parameters indicated by the third information include one or more of the following: a value of each RACH parameter used by the RA; or a type of the one or more RACH parameters used by the RA.

In an optional embodiment, the type of the one or more RACH parameters indicates that the one or more RACH parameters are: one or more dedicated RACH parameters configured for the feature combination; one or more additional RACH parameters for 2-step RA; one or more additional RACH parameters for 4-step RA; one or more dedicated RACH parameters for 2-step RA; one or more common RACH parameters for 2-step RA; one or more dedicated RACH parameters for 4-step RA; or one or more common RACH parameters for 4-step RA.

In an optional embodiment, the first information further includes fourth information, and the fourth information indicates RACH partition information used by the RA. The RACH partition information is: information about a feature combination corresponding to dedicated RACH partition information used by the RA; dedicated RACH partition information used by the RA; or actual RACH resource information used by the RA.

In an optional embodiment, the first information about the RA includes first information about successfully completed RA and/or first information about failed RA. In this embodiment, it is beneficial for the network device to learn the first information about successfully completed RA or about failed RA, which in turn facilitates the optimization of RA to improve the success rate of RA.

In an optional embodiment, the method further includes receiving indication information. The indication information indicates at least one of the following: the first information about the RA is to be recorded; or configuration information, where the configuration information is used to configure a format of the first information. In this way, the UE can record the first information about the RA after receiving the indication information from the network device, and/or the UE can record the first information about the RA in a format configured by the configuration information after receiving the indication information from the network device.

In the second aspect, an information processing method is provided in embodiments of the present disclosure, which corresponds to the information processing method described in the first aspect. The method is described from the perspective of a network device or a related apparatus in the network device. The method includes the following. First information about RA is received, where the first information indicates one or more parameters of a feature combination requested by the RA initiated by a UE.

Reference of optional embodiments of the information processing method can be made to relevant contents in the first aspect, which will be elaborated herein.

In the third aspect, an information processing apparatus is provided in embodiments of the present disclosure. The information processing apparatus may be a UE or a related apparatus in the UE. The information processing apparatus includes a sending unit. The sending unit is configured to send first information about RA, where the first information indicates one or more parameters of a feature combination requested by the RA initiated by a UE.

In an optional embodiment, the information processing apparatus may further include a recording unit configured to record the first information about the RA.

Reference of optional embodiments of the information processing apparatus can be made to relevant contents in the first aspect, which will be elaborated herein.

In the fourth aspect, an information processing apparatus is provided in embodiments of the present disclosure. The information processing apparatus may be a network device or a related apparatus in the network device. The information processing apparatus includes a receiving unit. The receiving unit is configured to receive first information about RA, where the first information indicates one or more parameters of a feature combination requested by the RA initiated by a UE.

Reference of optional embodiments of the information processing apparatus can be made to relevant contents in the first aspect, which will be elaborated herein.

In the fifth aspect, a communication apparatus is provided in embodiments of the present disclosure. The communication apparatus includes a processor, a memory, and a computer program stored in the memory. The computer program includes a program instruction, and the processor is configured to execute the program instruction to execute the information processing method in the first aspect. Optionally, the information processing apparatus may be a UE, or a chip or chip module in a UE.

In the sixth aspect, a communication apparatus is provided in embodiments of the present disclosure. The communication apparatus includes a processor, a memory, and a computer program stored in the memory. The computer program includes a program instruction, and the processor is configured to execute the program instruction to execute the information processing method in the second aspect. Optionally, the information processing apparatus may be a UE, or a chip or chip module in a UE.

In the seventh aspect, a chip is provided in embodiments of the present disclosure. The chip includes a processor, and the processor is configured to execute operations of the method described in the first or second aspect. Optionally, the chip includes a memory and a computer program or instruction stored in the memory, and the processor is configured to execute the computer program or instruction to implement the method described in the first or second aspect.

In the eighth aspect, a chip module is provided in embodiments of the present disclosure. The chip module includes a transceiver and a chip, the chip includes a processor, and the processor is configured to execute operations of the method described in the first or second aspect. Optionally, the chip includes a memory and a computer program or instruction stored in the memory, and the processor is configured to execute the computer program or instruction to implement the method described in the first or second aspect.

In the ninth aspect, a computer-readable storage medium is provided in embodiments of the present disclosure. The computer-readable storage medium is configured to store a computer program, the computer program includes a program instruction which, when executed, is configured for implementing operations of the method in the first or second aspect.

In the tenth aspect, a computer program product is provided in embodiments of the present disclosure. The computer program product includes a computer program or a program instruction, and the computer program or the program instruction, when executed, is configured for implementing operations of the method in the first or second aspect.

### BRIEF DESCRIPTION OF THE DRAWINGS

FIG. 1 is a schematic structural diagram of a communication system provided in an embodiment of the present disclosure.
FIG. 2 is a schematic flowchart of an information processing method 100 provided in an embodiment of the present disclosure.
FIG. 3 is a schematic flowchart of an information processing method 200 provided in an embodiment of the present disclosure.
FIG. 4 is a schematic flowchart of an information processing method 300 provided in an embodiment of the present disclosure.
FIG. 5 is a schematic flowchart of an information processing method 400 provided in an embodiment of the present disclosure.
FIG. 6 is a schematic structural diagram of an information processing apparatus provided in an embodiment of the present disclosure.
FIG. 7 is a schematic structural diagram of another information processing apparatus provided in an embodiment of the present disclosure.
FIG. 8 is a schematic structural diagram of a communication apparatus provided in an embodiment of the present disclosure.

### DETAILED DESCRIPTION

Based on embodiments in the present disclosure, all other embodiments obtained by those of ordinary skill in the art without creative effort shall fall within the protection scope of the disclosure.

The phrase "embodiments" as used herein means one or more embodiments that include specific features, structures, or characteristics as described in conjunction with the embodiments. Use of the phrase throughout the specification does not necessarily refer to the same embodiment, nor are the embodiments mutually exclusive or alternative. Those skilled in the art will appreciate that the embodiments described herein may be combined with other embodiments.

It is to be noted, the terms "first," "second", "third", etc. used in the present disclosure are intended for distinguishing different objects rather than describing a particular sequence. Furthermore, the term "including" and it's any variations intend to cover non-exclusively including. For example, a process, method, system, product, or apparatus that includes a series of steps or units is not limited to the listed steps or units but may optionally include unlisted steps or units or optionally include other steps or units inherent in these processes, methods, products, or devices. It may also be understood that the term "and/or" used in the disclosure refers to and includes any or all possible combinations of one or more listed items.

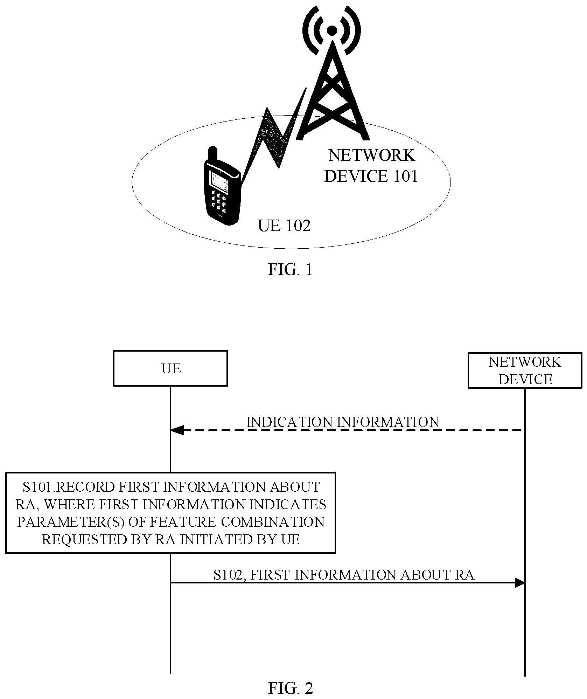

Embodiments of the present disclosure may be applied to the communication system illustrated in FIG1. The communication system may include a network device 101 and a user equipment (UE) 102. The number and form of the devices or equipment illustrated in FIG. 1 are used as an example and do not limit embodiments of the present disclosure. In actual applications, the communication system may include one or more network devices and on or more UEs. In the communication system illustrated in FIG. 1, the network device 101 may provide services to the UE 102. Optionally, in embodiments of the present disclosure, the communication system may further include other devices that communicate with the network device 101 or the UE 102, which are not limited in embodiments of the present disclosure.

The present disclosure is applicable to a fifth generation (5G) communication system, a fourth generation (4G) communication system, a third generation (3G) communication system, and future new various communication systems, for example, a sixth generation (6G) communication system, a seventh generation (7G) communication system, or the like, which is not limited in embodiments of the present disclosure.

In embodiments of the present disclosure, a network device may be a base station (BS) or a BS controller of an access network. A BS may be referred to as a BS device, and is an apparatus deployed in a radio access network (RAN) to provide a wireless communication function. For example, a device providing a BS function in a second generation mobile communication (2G) network includes a base transceiver station (BTS). A device providing a BS function in a 3G network includes an NodeB. A device providing a BS function in a 4G network include an evolved NodeB (eNB). A device providing a BS function in a wireless local area network (WLAN) is an access point (AP). A device providing a BS function in 5G new radio (NR) is the next generation Node B (gNB) and the next generation eNodeB (ng-eNB), where the gNB and the UE communicate with each other by using the NR technology, the ng-eNB and the UE communicate with each other by using the evolved universal terrestrial radio access (E-UTRA) technology, and both the gNB and the ng-eNB may be connected to the 5G core network. The BS in embodiments of the present disclosure further includes a device providing a BS function in a future new communication system, or the like.

In embodiments of the present disclosure, the BS controller may also be referred to as a BS controller device, which is an apparatus for managing a BS, such as, a base station controller (BSC) in a 2G network, a radio network controller (RNC) in a 3G network, and a device for controlling and managing a BS in a future new communications system.

Optionally, the network device may be a network element or a functional entity of a core network, and is configured to provide functions such as session management, mobility management, and policy management for the UE. For example, the network device may be an access and mobility management function (AMF) network element, a network data analysis function (NWDAF) network element, a trace collection entity (TCE), a measurement collection entity (MCE), or an operation administration and maintenance (OAM) device, etc. The AMF network element is responsible for mobility management in a mobile network, etc. The NWDAF network element is responsible for network data analysis. The TCE or MCE is responsible for trace or record collection. The OAM is responsible for operation administration and maintenance on the network.

In embodiments of the present disclosure, a UE may be referred to as a terminal device or terminal, and may refer to various forms of access terminals, subscriber units, subscriber stations, mobile stations, mobile stations (MS), remote stations, remote terminals, mobile devices, user terminals, wireless communication devices, user agents, or user apparatus. The UE may also be a cellular telephone, a cordless telephone, a session initiation protocol (SIP) phone, a wireless local loop (WLL) station, personal digital assistant (PDA), a handheld device having wireless communication capability, a computing device, or other processing device connected to a wireless modem, a terminal device in a 5G network or a future evolved public land mobile network (PLMN), etc., which is not limited in embodiments of the present disclosure is not limited.

Various new features, such as coverage enhancement, network slice (or referred to as slice), and small data transmission as described above, are introduced into a communication network to improve network performance. Therefore, with regard to various new features, how to further optimize a network is a problem to be solved.

An information processing method is provided in embodiments of the present disclosure. In the method, first information about random access (RA) is sent, where the first information indicates one or more parameters of a feature combination requested by the RA initiated by a UE. By means of the information processing method, the parameter of the feature combination requested by the RA is reported, thereby facilitating the network device to perform further network optimization based on the feature combination. For example, the network device may configure RA resources based on a feature combination, etc., to improve the utilization rate of network resources.

Optionally, the information processing method can further include recording the first information about the RA. In the information processing method 100 to the information processing method 400 described below, the step of recording the first information about the RA may be optional.

For ease of understanding, some concepts involved in the present disclosure are set forth.

### 1, RA

Through RA, a UE can implements initial access and recess after cell handover or radio link failure. A network device may send RA-related information, such as RA resources and random access channel (RACH) parameters; and correspondingly, a UE may use the RA-related information to execute RA-related procedure.

### 2. Random Access Report (RA-Report)

After executing the RA, the UE records the RA-Report. Optionally, RA-Reports of multiple RAs may be stored and recorded in an RA-Report list. The maximum number M of RA-Reports that the RA-Report list can include is predefined. Optionally, the RA-Report may include requested cell information (e. g., cell identity, physical cell identity, carrier information, etc.), the purpose of the RA (e. g., access requested, beam failure recovery, reconfiguration, uplink synchronization, etc.), and other information about the RA, etc.

### 3. Feature Combination

A feature combination may also be referred to as a feature. A feature combination may be one or more features. For ease of description, the description is given by taking a feature combination as an example.

For example, the feature combination may include any one or more of reduced capability (Redcap), small data transmission (SDT), slice or slice group (slice/slice Group), coverage enhancement (CE).

The slice group may also be a network slice access stratum group (NSAG).

### 4, RACH parameters

For example, the RACH parameters may include, but are not limited to, one or more of the following: synchronization signal Block (SSB) selection related parameters such as *RSRP-ThresholdSSB, msgA-RSRP-ThresholdSSB,* etc.), a preamble group related parameter (for example, *msg3-DeltaPreamble* in 4-step RA, *msgA-DeltaPreamble* in 2-step RA, etc.), RA priority parameter, a power ramping parameter (such as *powerRampingStepHighPriority*) and a scaling factor (such as *scaling factor BI*), etc.

### 5, RACH partition information

The RACH partition information may also be referred to as RACH isolation information, and is information related to RACH resources. For example, the RACH partition information may include the number of preambles for this partition, the number of RA-preambles group A, and the start preamble for this partition.

Embodiments of the present disclosure will be described below with reference to the accompanying drawings.

Reference is made to FIG. 2, which is a schematic flowchart of an information processing method 100 provided in an embodiment of the present disclosure. As illustrated in FIG. 2, the information processing method 100 may include, but is not limited to, the following operations.

At S101, a UE records first information about RA, where the first information indicates on or more parameter of a feature combination requested by the RA initiated by the UE.

At S102, the UE sends the first information about the RA, and correspondingly, a network device receives the first information about the RA.

Optionally, the UE may record the first information about successfully completed RA, or the UE may record the first information about failed RA. Alternatively, the UE may record the first information about successfully completed RA and the first information about failed RA. Thus, it is beneficial for the network device to know the initiation situation of the RA in time.

In an optional implementation, the first information indicates one or more parameters of a feature combination requested by the RA initiated by the UE, that is, some parameters related to the feature combination requested by the RA. Optionally, the first information may include second information, where the second information indicates the feature combination requested by the RA initiated by the UE. It can be seen that, in this embodiment, the first information may include second information indicating for which feature combination the RA attempts for, thereby facilitating the network device to learn the feature combination requested by the RA, and further optimizing the RA according to the feature combination requested by the RA.

Optionally, in addition to the foregoing feature combination indicated by the second information, the parameter of the feature combination indicated by the first information can further include one or more of: an RACH parameter(s) corresponding to the feature combination requested by the RA indicated by the third information, or RACH partition information used by the RA indicated by the fourth information. For details, reference may be made to the relevant content described in FIG. 2 to FIG. 5 in the present disclosure.

In an optional embodiment, as illustrated in FIG. 2, before executing operations at S101, the UE may further receive indication information; Correspondingly, the network device sends the indication information. In an optional embodiment, the indication information indicates that the first information about the RA is to be recorded. It can be seen that in this embodiment, the UE receives the indication information, and executes operations at S101. In another optional embodiment, the indication information indicates configuration information, and the configuration information is used to configure a format of the first information. Correspondingly, at S101, the UE may record the first information about the RA according to the format configured by the configuration information. The configuration information may be specifically used to configure the content and format of the first information, and then the UE records the first information about the RA according to the configured content and format. In yet another optional embodiment, the indication information indicates the configuration information and that the first information for the RA is to be recorded. It can be seen that the network device may not only instruct the UE to record the first information about the RA, but also may configure the content and format for recording the first information.

In an optional embodiment, the UE records the first information about the RA by recording an RA-Report of the RA, and the RA-Report of the RA includes the first information about the RA. That is to say, when the UE records RA related information, such as the RA-Report, the first information about the RA may be added, that is, the parameter of the feature combination requested by RA may be added. Optionally, the indication information may be sent by the network device to the UE through a UE information request message (*UEInformationRequest*) (optionally, RA-Report request (*ra-Report Req*) field in the *UEInformationRequest* may be set to be True), or sent to the UE through an RRC reconfiguration message, or sent to the UE through another message. The first information about the RA can be carried in the RA-Report. At S102, the UE can report the RA-Report to the network device via a UE information response message (*UEInformationResponse*).

For example, for illustrative purpose, the UE records the first information about successfully completed RA and the first information may include the second information. As illustrated in table 1, the RA-Report information (for example, a RA-Report list) reported by the UE may include three RA-Reports, which respectively carry feature combinations requested by RAs successfully completed by the UE. It can be seen that feature combinations requested by three RAs initiated by the UE are different. Among the number of successful RAs, the feature combination requested by the RA that is successfully completed for the first time is CE and SDT; the feature combination requested by the RA that is successfully completed for the second time is Redcap and CE; and the feature combination requested by the RA that is successfully completed for the third time is Redcap and SDT.

Optionally, in the RA-Report information reported by the UE, each successfully completed RA may correspond to multiple RA-Reports, for example, RA-Reports of multiple RAs previously attempted before this successfully completed RA. In other words, each successfully completed RA may correspond to a RA-Report list to be reported, which includes a RA-Report of the successfully completed RA and RA-Reports of previously attempted RAs.

**Table 1**

| Number of times of successful RA | Feature combination |
|---|---|
| First time | CE and SDT |
| Second time | Redcap and CE |
| Third time | Redcap and SDT |

Optionally, after the UE sends the first information about the RA at S102, the UE may further clear the recorded first information about the RA, that is, clear the stored first information about the RA that has been reported. Optionally, after sending the RA-Report, the UE may clear the stored RA-Report.

Optionally, after operations at S102, the network device can adjust RACH resources based on the first information about the RA. In this embodiment, the RACH resources for each feature combination can be optimized, thus avoiding the case where the RACH resources are not reasonably allocated (for example, if the RACH resources for a certain feature combination are few, the access success rate of the RACH procedure for the feature combination is reduced, and the establishment of the feature service is influenced; if the RACH resources for a certain feature combination are excessive, the utilization rate of network resources may be reduced, i. e., the excessive RACH resources can be allocated to other feature combinations. Compared with fixed allocation of RACH resources, changes in utilization rates of RACH resource during different time periods is taken into consideration during adjusting RACH resources for a feature combination based on the first information about the RA, thereby improving the utilization rate of network resources.

It can be seen that, in the information processing method 100, the UE can record and report the parameter of the feature combination requested by RA, thereby facilitating a network device to optimize a network by using the parameter of the feature combination.

An information processing method 200 is further provided in embodiments of the present disclosure. Compared with the information processing method 100, in the information processing method 200, the UE records, after performing an RA procedure each time, first information about the RA, i. e., the first information including first information about successfully completed RA and first information about failed RA.

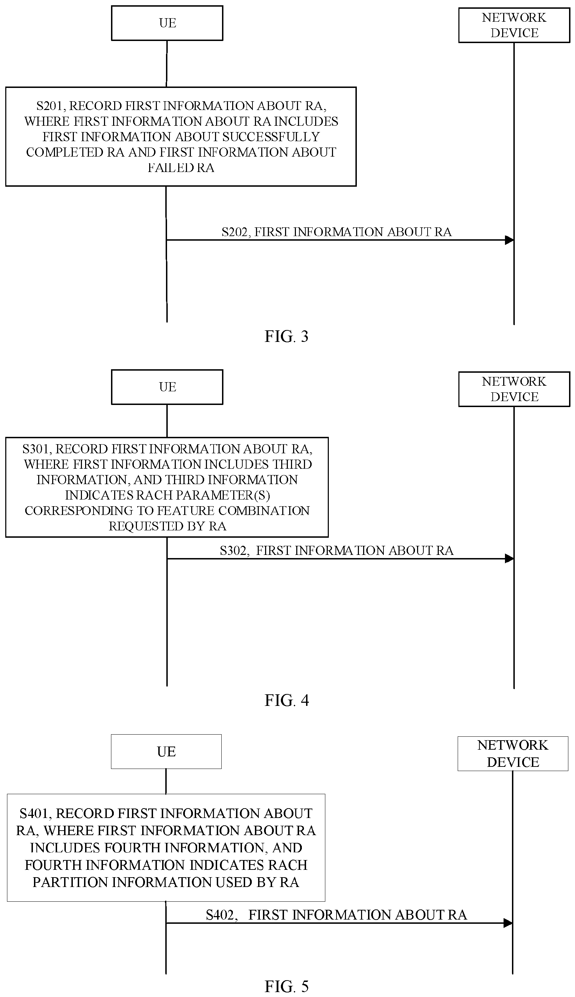

Reference is made to FIG. 3, which is a schematic flowchart of an information processing method 200 provided in an embodiment of the present disclosure. As illustrated in FIG. 3, the information processing method 200 may include, but is not limited to, the following operations.

At S201, a UE records first information about RA, where the first information about the RA includes first information about successfully completed RA and first information about failed RA.

In other words, the UE may record both the first information about successfully completed RA and the first information about failed RA.

At S202, the UE sends the first information about the RA, and correspondingly, the network device receives the first information about the RA.

Optionally, in the information processing method 100 and the information processing method 200, if the network device is a network element or device of a core network, the UE may indirectly send the first information about the RA to the network device through the access network device, which is not limited in the present disclosure.

For example, for illustrative purpose, the UE firstly successfully initiates RAs two times, then fails to initiate RA one time, and then successfully initiates RA one time, the UE may record the first information about the RAs successfully completed two times, the first information about the RA failed one time, and the first information about the RA successfully completed one time. The first information about the RA recorded multiple times may be carried in different RA-Reports, and sent to the network device in a RA-Report list. As illustrated in Table 2, the feature combination of RA initiated successfully for the first time is CE and SDT, and the feature combination of RA initiated successfully for the second time is Redcap and CE; the feature combination of RA initiated unsuccessfully for the third time is Redcap and SDT; and the feature combination of RA initiated successfully for the fourth time is Redcap and SDT.

Optionally, as described above, in the RA-Report information reported by the UE, each successfully completed RA may correspond to an RA-Report list, where the RA-Report list includes the RA-Report of the successfully completed RA and the RA-Reports of previously attempted RAs. Correspondingly, each failed RA may also correspond to an RA-Report list, where the RA-Report list includes the RA-Report of the failed RA and the RA-Reports of previously attempted RAs.

**Table 2**

| Times of RA | Whether RA succeeds | Feature combination |
|---|---|---|
| The first time | YES | CE and SDT |
| The second time | YES | Redcap and CE |
| The third time | NO | Redcap and SDT |
| The fourth time | YES | Redcap and SDT |

Optionally, for other optional embodiments of operations at S201 and S202, reference may be made to relevant description in the information processing method 100, which will not be described in detail herein again.

It can be seen that in this embodiment, the network device not only can perform adjustment on the RACH resource allocation for the feature combination based on the first information about the successfully completed RA, but also based on the first information about the failed RA, thereby avoiding unreasonable RACH resource allocation, facilitating the network device to optimize the network, and improving the utilization rate of the network resources.

It can be seen that in the information processing method 200, the UE can not only add feature combination related information, so that the network can perceive an access condition of RA for the feature combination, but also recording information such as the number of access times and a use frequency, such that RACH resources are adjusted and allocated for the feature combination, thereby improving the utilization rate of the overall network resources and improving the user experience. In addition, the access condition of a failed RA can also be considered, so that the network can evaluate whether the RACH resource allocation is reasonable from another perspective, and adjust the RACH resource allocation policy.

An information processing method 300 is further provided in an embodiment of the present disclosure, which differs from the information processing method 100 in that the first information can further includes third information, and the third information indicates an RACH parameter(s) corresponding to the feature combination requested by the RA. Reference is made to FIG. 4, which is a schematic flowchart of an information processing method 300 provided in an embodiment of the present disclosure. As illustrated in FIG. 4, the information processing method 300 may include, but is not limited to, the following operations.

S301, a UE records first information about RA, where the first information includes third information, and the third information indicates an RACH parameter(s) corresponding to the feature combination requested by the RA.

S302, the UE sends the first information about the RA, and correspondingly, the network device receives the first information about the RA.

Optionally, the RACH parameter(s) indicated by the third information includes one or more of the following: a value of each RACH parameter used by the RA; a type of the RACH parameter(s) used by RA. That is to say, the UE may record additionally a value of an RACH parameter(s) used per RA, such as a preamble transmission power per RA; and/or the type of RACH parameter(s) used per RA, etc.

In an optional embodiment, the type of the RACH parameter(s) may refer to: the RACH parameter(s) is a dedicated RACH parameter(s) configured for the feature combination, or a common RACH parameter(s) (or referred to as an RA common configuration parameter(s)), or an additional common RACH parameter(s) (or referred to as an additional RA common configuration parameter(s)). Alternatively, the dedicated RACH parameter(s) may include an RACH parameter(s) for 2-step RA and/or an RACH parameter(s) for 4-step RA. Optionally, the common RACH parameter(s) may include a common RACH parameter(s) for 2-step RA and/or a common RACH parameter(s) for 4-step RA. Optionally, the additional common RACH parameter(s) may include an additional RACH parameter(s) for 2-step RA and/or an additional RACH parameter(s) for 4-step RA.

In another optional embodiment, the type of the RACH parameter(s) refers to that the RACH parameter(s) is an additional RACH parameter(s) for 2-step RA; or an additional RACH parameter(s) for 4-step RA, or a dedicated RACH parameter(s) for 2-step RA, or a common RACH parameter(s) for 2-step RA, or a dedicated RACH parameter(s) for 4-step RA; or a common RACH parameter(s) of the burst RA.

The dedicated RACH parameter for 2-step RA and the dedicated RACH parameter for 4-step RA may be included in the dedicated RACH parameter, or the dedicated RACH parameter includes a dedicated RACH parameter for 2-step RA and/or a dedicated RACH parameter for 4-step RA. The common RACH parameter for 2-step RA and the common RACH parameter for 4-step RA may be included in a common RACH parameter, or the common RACH parameter includes the common RACH parameter for 2-step RA and/or the common RACH parameter for 4-step RA. The additional RACH parameter for 2-step RA and the additional RACH parameter for 4-step RA may be included in the additional common RACH parameter, or the additional common RACH parameter may include the additional RACH parameter for 2-step RA and/or the additional RACH parameter for 4-step RA.

For example, the additional common RACH parameter is represented as *AdditionalRACH-ConfigCommon-r17,* the additional RACH parameter for 4-step RA is represented as *rach-ConfigCommon-r17,* and the additional RACH parameter for 2-step RA is represented as *msgA-ConfigCommon -r17.* The value of the additional RACH parameter for 4-step RA may be a value of a structure of a common RACH parameter for 4-step RA; and the value of the additional RACH parameter for 2-step RA may be a value of a structure of a common RACH parameter for 2-step RA. The common RACH parameter for 4-step RA may be represented as *rach-ConfigCommon,* and the common RACH parameter for 2-step RA may be represented as *msgA-ConfigCommon.* Then, the additional common RACH parameter including an additional RACH parameter for 2-step RA and/or an additional RACH parameter for 4-step RA may be expressed as:

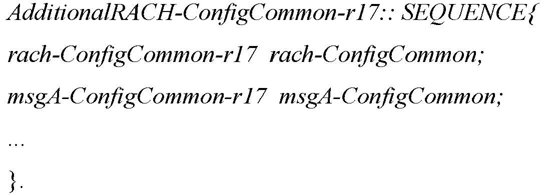

The additional common RACH parameter may be interpreted as an RACH configuration other than a common RACH parameter.

The dedicated RACH parameter is configured for a certain feature combination.

Optionally, for other optional embodiments of operations at S301 and S302, reference may be made to relevant description in the information processing method 100, which will not be described in detail herein again.

It can be seen that in the information processing method 300, the UE can not only add feature combination related information, so that the network can perceive an access condition of RA for the feature combination, but also recording information such as the number of access times and a use frequency, such that RACH resources are adjusted and allocated for the feature combination, thereby improving the utilization rate of the overall network resources and improving the user experience. In addition, the RACH parameter corresponding to the feature combination requested by RA can also be considered at the same time, and in this way, the network device not only can adjust an allocated RACH resource for the feature combination, but also can adjust and set the value of an RACH parameter, thereby improving the utilization rate of overall network resources.

An information processing method 400 is further provided in embodiments of the present disclosure, which differs from the information processing method 100 in that the first information further includes fourth information, where the fourth information indicates RACH partition information used by the RA. Reference is made to FIG. 5, which is a schematic flowchart of an information processing method 400 provided in an embodiment of the present disclosure. As illustrated in FIG. 5, the information processing method 400 may include, but is not limited to, the following operations.

At S401, a UE records first information about RA, where the first information about the RA includes fourth information, and the fourth information indicates RACH partition information used by the RA.

At S402, the UE sends the first information about the RA, and correspondingly, the network device receives the first information about the RA.

The RACH partition information is information about a feature combination corresponding to dedicated RACH partition information used by the RA; or dedicated RACH partition information used by the RA; or actual RACH resource information used by the RA.

The information about the feature combination corresponding to the dedicated RACH partition information used by the RA is not the second information described above. For example, for illustrative purpose, the first information includes the second information and the fourth information, the fourth information indicates that the RACH partition information used by the RA is information about a feature combination corresponding to dedicated RACH partition information used by the RA, and then the first information may be expressed as:

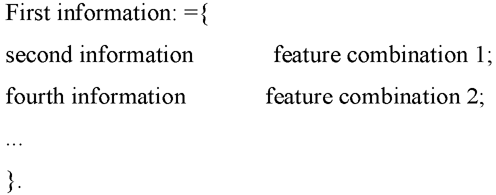

In the first information, feature combination 1 may be interpreted as that the feature combination requested by the RA this time is feature combination 1; feature combination 2 can be interpreted as the RACH partition information used by the RA this time is dedicated RACH partition information for feature combination 2, in other words, the RACH partition information used by the RA requesting feature combination 1 is the dedicated RACH partition information for feature combination 2.

The dedicated RACH partition information used by the RA refers to dedicated RACH partition information allocated for the feature combination requested by the RA, or dedicated RACH partition information allocated for other feature combinations used by the RA as described above. For example, the RACH partition information may include number of preambles for this partition, number of RA-preambles group A, and start preamble for this partition, etc.

The actual RACH resource information used by RA is described by an RA frequency, an SSB, a random access occasion (RO), a preamble, etc., so as to determine time-frequency resources used by the RA this time.

Optionally, for other optional embodiments of operations at S401 and S402, reference may be made to relevant description in the information processing method 100, which will not de described in detail herein again.

It can be seen that in the information processing method 400, the UE can not only add feature combination related information, so that the network can perceive an access condition of RA for the feature combination, but also recording information such as the number of access times and a use frequency, such that RACH resources are adjusted and allocated for the feature combination, thereby improving the utilization rate of the overall network resources and improving the user experience. In addition, considering that some feature combinations are not configured with dedicated RACH resources, by means of the information processing method 400, the network is facilitated to make statistics on the frequency and success rate of using the RACH resources by the type of feature combination, so that RACH resource configuration is adjusted, for example, RACH resources are also allocated for these feature combinations with a high access frequency.

It is to be noted that embodiments of the present disclosure include, but are not limited to, the information processing methods 100 to 400. For example, the first information may include one or more of the second information, the third information, or the fourth information. In this way, the network device may consider one or more of the information, so as to improve the utilization rate of the overall network resources.

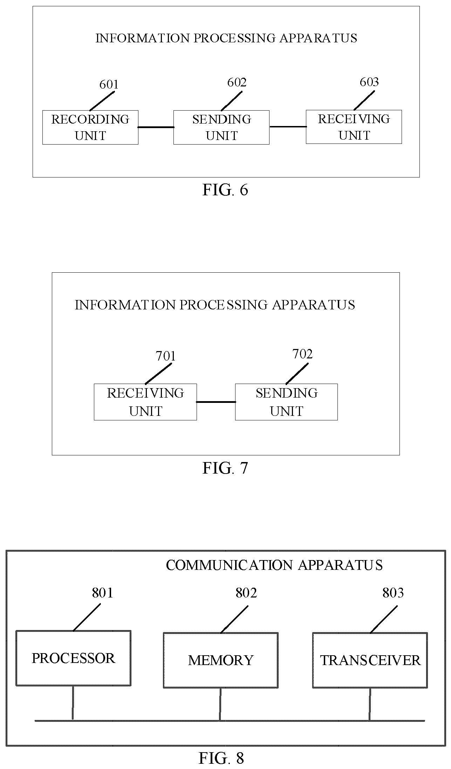

Reference is made to FIG. 6, which is a schematic structural diagram of an information processing apparatus provided in an embodiment of the present disclosure. As illustrated in FIG. 6, the information processing apparatus includes but is not limited to the following units.

A sending unit 602 is configured to send first information about RA, where the first information indicates one or more parameters of a feature combination requested by the RA initiated by a UE.

Optionally, the information processing apparatus may further include a recording unit 601. The recording unit 601 is configured to record the first information about the RA.

In an optional embodiment, the first information includes second information; and the second information indicates the feature combination requested by the RA initiated by the UE.

In an optional embodiment, the first information further includes third information, and the third information indicates one or more RACH parameters corresponding to the feature combination requested by the RA.

In an optional embodiment, the one or more RACH parameters indicated by the third information include one or more of the following: a value of each RACH parameter used by the RA; or a type of the one or more RACH parameters used by the RA.

In an optional embodiment, the type of the one or more RACH parameters indicates that the one or more RACH parameters are: one or more dedicated RACH parameters configured for the feature combination; one or more additional RACH parameters for 2-step RA; one or more additional RACH parameters for 4-step RA; one or more dedicated RACH parameters for 2-step RA; one or more common RACH parameters for 2-step RA; one or more dedicated RACH parameters for 4-step RA; or one or more common RACH parameters for 4-step RA.

In an optional embodiment, the first information further includes fourth information, and the fourth information indicates RACH partition information used by the RA. The RACH partition information is: information about a feature combination corresponding to dedicated RACH partition information used by the RA; dedicated RACH partition information used by the RA; or actual RACH resource information used by the RA.

In an optional embodiment, the first information about the RA includes first information about successfully completed RA and/or first information about failed RA.

In an optional embodiment, the apparatus further includes a receiving unit 603. The receiving unit 603 is configured to receive indication information. The indication information indicates at least one of the following: the first information about the RA is to be recorded; or configuration information, where the configuration information is used to configure a format of the first information. In this way, the UE can record the first information about the RA after receiving the indication information from the network device, and/or the UE can record the first information about the RA in a format configured by the configuration information after receiving the indication information from the network device.

It may be understood that, for specific implementation of each unit in the information processing apparatus provided in the embodiment of the present disclosure and beneficial effects that can be achieved, reference may be made to the description of any one of the foregoing information processing method 100, information processing method 200, information processing method 300, and information processing method 400, which will not be described in detail herein.

Reference is made to FIG. 7, which is a schematic structural diagram of an information processing apparatus provided in an embodiment of the present disclosure. As illustrated in FIG. 7, the information processing apparatus includes but is not limited to the following units.

A receiving unit 701 is configured to receive first information about RA, where the first information indicates one or more parameters of a feature combination requested by the RA initiated by a UE.

In an optional embodiment, the first information includes second information; and the second information indicates the feature combination requested by the RA initiated by the UE.

In an optional embodiment, the first information further includes third information, and the third information indicates one or more RACH parameters corresponding to the feature combination requested by the RA.

In an optional embodiment, the one or more RACH parameters indicated by the third information include one or more of the following: a value of each RACH parameter used by the RA; or a type of the one or more RACH parameters used by the RA.

In an optional embodiment, the type of the one or more RACH parameters indicates that the one or more RACH parameters are: one or more dedicated RACH parameters configured for the feature combination; one or more additional RACH parameters for 2-step RA; one or more additional RACH parameters for 4-step RA; one or more dedicated RACH parameters for 2-step RA; one or more common RACH parameters for 2-step RA; one or more dedicated RACH parameters for 4-step RA; or one or more common RACH parameters for 4-step RA.

In an optional embodiment, the first information further includes fourth information, and the fourth information indicates RACH partition information used by the RA. The RACH partition information is: information about a feature combination corresponding to dedicated RACH partition information used by the RA; dedicated RACH partition information used by the RA; or actual RACH resource information used by the RA.

In an optional embodiment, the first information about the RA includes first information about successfully completed RA and/or first information about failed RA.

In an optional embodiment, the apparatus further includes a sending unit 702. The sending unit 702 is configured to send indication information. The indication information indicates at least one of the following: the first information about the RA is to be recorded; or configuration information, where the configuration information is used to configure a format of the first information. In this way, the UE can record the first information about the RA after receiving the indication information from the network device, and/or the UE can record the first information about the RA in a format configured by the configuration information after receiving the indication information from the network device.

It may be understood that, for specific implementation of each unit in the information processing apparatus provided in the embodiment of the present disclosure and beneficial effects that can be achieved, reference may be made to the description of any one of the foregoing information processing method 100, information processing method 200, information processing method 300, and information processing method 400, which will not be described in detail herein.

Refer to FIG 8, where FIG. 8 is a structural diagram of a communication apparatus provided in an embodiment of the present disclosure. The communication apparatus includes a processor 801, a transceiver 803, and a memory 802, where the processor 801 and the memory 802 are connected via one or more communication buses.

The transceiver 803 is configured to send data or receive data. The memory 802 is configured to store a command or a computer program. The memory 802 may include a read-only memory (ROM) and a random access memory (RAM), and is configured to provide the processor 801 with the command and the data. The memory 802 may also partially include nonvolatile random access memory (NVRAM).

The processor 801 may be a central processing unit (CPU), and the processor 801 may also be a general-purpose processor, a digital signal processor (DSP), an application specific integrated circuit (ASIC), a field-programmable gate array (FPGA), or another programmable logic device, a discrete gate or a transistor logic device, a discrete hardware component, or the like. The general-purpose processor may be a microprocessor. Optionally, the processor may also be any conventional processor.

In an optional embodiment, the communication apparatus may be a UE or a chip or chip module in the UE. The processor 801 may be configured to execute a computer program or a command stored in the memory 802, to make the communications apparatus to send first information about RA, where the first information indicates one or more parameters of a feature combination requested by the RA initiated by a UE.

For more detailed operations of the components such as the processor 801 and the transceiver 803, reference may be made to the relevant description in the embodiments of the information processing method described in the foregoing.

In another optional embodiment, the communication apparatus may be a network device or a chip or chip module in the network device. The processor 801 may be configured to execute a computer program or a command stored in the memory 802, to make the communications apparatus to receive first information about RA, where the first information indicates one or more parameters of a feature combination requested by the RA initiated by a UE.

For more detailed operations of the components such as the processor 801 and the transceiver 803, reference may be made to the relevant description in the embodiments of the information processing method described in the foregoing.

A chip is further provided in embodiments of the present disclosure. The chip includes a processor, where the processor is configured to execute operations described in the above method embodiments. Optionally, the chip may include a processor, a memory, and a computer program or instruction stored in the memory, where the processor is configured to execute the computer program or instruction to implement operations described in the foregoing method embodiments.

A chip module is further provided in embodiments of the present disclosure. The chip module includes a transceiver and a chip, the chip includes a processor, and the processor is configured to execute operations described in the above method embodiments. Optionally, the chip may include a memory and a computer program or instruction stored in the memory, and the processor is configured to the computer program or instruction to execute operations described in the above method embodiments.

A computer-readable storage medium is further provided in embodiments of the present disclosure. The computer-readable storage medium is configured to store a computer program, and the computer program includes a program instruction which, when executed, is configured for implementing operations described in the above method embodiments.

A computer program product is further provided in embodiments of the present disclosure. The computer program product includes a computer program or an instruction which, when executed, is configured for implementing operations described in the above method embodiments.

Each module/unit included in each apparatus described in the foregoing embodiments may be a software module/unit, a hardware module/unit, or a part of a software module/unit and a part of a hardware module/unit. For example, for each apparatus or product applied to or integrated in a chip, each module/unit contained therein may be implemented by hardware such as circuits, or at least some of the modules/units may be implemented by a software program that runs on a processor integrated in the chip, and the remaining modules/units may be implemented by hardware such as circuits. For each apparatus and product applied to or integrated in the chip module, each module/unit contained therein may be implemented by hardware such as circuits, different modules may be located in the same component (such as a chip, circuit module, etc.) or different components of the chip module, or at least some modules/units may be implemented by a software program that runs on a processor integrated in the chip module, and the remaining modules/units may be implemented by hardware such as circuits. For each apparatus and product applied to or integrated in the terminal, each module/unit contained therein may be implemented by hardware such as circuits, and different modules/units can be located in the same component (for example, chip, circuit module, etc.) or different components in the terminal, or at least some of the modules/units may be implemented in the form of software programs that run on the processor integrated inside the terminal, and the remaining modules/units may be implemented by hardware such as circuits.

Steps of the method or algorithm described in embodiments of the present disclosure may be implemented by means of hardware, and may also be implemented by means of software instructions executed by a processor. The software instructions may consist of respective software modules, and the software modules may be stored in random access memory (RAM), flash memory, read-only memory (ROM), erasable programmable ROM (EPROM), electrically erasable programmable ROM (EEPROM), a register, a hard disk, a removable hard disk, a compact disc-read only memory (CD-ROM), or any other forms of storage medium known in the art. An exemplary storage medium is coupled to the processor such that the processor can read information from, and write information to, the storage medium. Certainly, the storage medium may also be a component of the processor, and the processor and the storage medium may be located in an application specific integrated circuit (ASIC). In addition, the ASIC may be located in a UE or a network device. Certainly, the processor and the storage medium may also exist in the UE or the network device as discrete components.

It would be appreciated to those skilled in the art that, in one or more embodiments above, all or part of the above functions described in embodiments of the present disclosure can be implemented through software, hardware, firmware, or any other combination thereof. When implemented by software, all or part of the above functions can be implemented in the form of a computer program product. The computer program product includes one or more computer instructions. When the computer instructions are applied and executed on a computer, all or part of the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fibre, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

The embodiments described above describe in further detail purposes, technical solutions and advantages of the embodiments of the disclosure. It should be understood that, the above is only specific embodiments of embodiments of the disclosure, and are not used to limit the protection scope of embodiments of the disclosure. Any modification, equivalent substitution, improvement, and the like that is made on the basis of technical solutions of embodiments of the disclosure shall be included in the protection scope of embodiments of the disclosure.

## Claims

1. An information processing method, comprising:
sending first information about random access (RA), wherein the first information indicates one or more parameters of a feature combination requested by the RA initiated by a user equipment (UE).

2. The method of claim 1, wherein before sending the first information about the RA, the method further comprises:
recording the first information about the RA.

3. The method of claim 1 or 2, wherein the first information comprises second information, and the second information indicates the feature combination requested by the RA initiated by the UE.

4. The method of claim 1 or 2, wherein the first information further comprises third information, and the third information indicates one or more random access channel (RACH) parameters corresponding to the feature combination requested by the RA.

5. The method of claim 4, wherein the one or more RACH parameters indicated by the third information comprise one or more of the following:
a value of each RACH parameter used by the RA; or
a type of the one or more RACH parameters used by the RA.

6. The method of claim 5, wherein the type of the one or more RACH parameters indicates that the one or more RACH parameters are:
one or more dedicated RACH parameters configured for the feature combination;
one or more additional RACH parameters for 2-step RA;
one or more additional RACH parameters for 4-step RA;
one or more dedicated RACH parameters for 2-step RA;
one or more common RACH parameters for 2-step RA;
one or more dedicated RACH parameters for 4-step RA; or
one or more common RACH parameters for 4-step RA.

7. The method of any one of claims 1 to 6, wherein the first information further comprises fourth information, wherein the fourth information indicates RACH partition information used by the RA; and
the RACH partition information is:
information about a feature combination corresponding to dedicated RACH partition information used by the RA;
dedicated RACH partition information used by the RA; or
actual RACH resource information used by the RA.

8. The method of any one of claims 1 to 7, wherein the first information about the RA includes first information about successfully completed RA and/or first information about failed RA.

9. The method of any one of claims 1 to 8, further comprising:
receiving indication information;
wherein the indication information indicates at least one of the following:
the first information about the RA is to be recorded; or
configuration information, wherein the configuration information is used to configure a format of the first information.

10. An information processing method, comprising:
receiving first information about random access (RA), wherein the first information indicates one or more parameters of a feature combination requested by the RA initiated by a user equipment (UE).

11. The method of claim 10, wherein the first information comprises second information, and the second information indicates the feature combination requested by the RA initiated by the UE.

12. The method of claim 10 or 11, wherein the first information further comprises third information, and the third information indicates one or more random access channel (RACH) parameters corresponding to the feature combination requested by the RA.

13. The method of claim 12, wherein the one or more RACH parameters indicated by the third information comprise one or more of the following:
a value of each RACH parameter used by the RA; or
a type of the one or more RACH parameters used by the RA.

14. The method of claim 13, wherein the type of the one or more RACH parameters indicates that the one or more RACH parameters is:
one or more dedicated RACH parameters configured for the feature combination;
one or more additional RACH parameters for 2-step RA;
one or more additional RACH parameters for 4-step RA;
one or more dedicated RACH parameters for 2-step RA;
one or more common RACH parameters for 2-step RA;
one or more dedicated RACH parameters for 4-step RA; or
one or more common RACH parameters for 4-step RA.

15. The method of any one of claims 10 to 14, wherein the first information further comprises fourth information, and the fourth information indicates RACH partition information used by the RA; and
the RACH partition information is:
information about a feature combination corresponding to dedicated RACH partition information used by the RA;
dedicated RACH partition information used by the RA; or
actual RACH resource information used by the RA.

16. The method of any one of claims 10 to 15, wherein the first information about the RA includes first information about successfully completed RA and/or first information about failed RA.

17. The method of any one of claims 10 to 16, further comprising:
sending indication information;
wherein the indication information indicates at least one of the following:
the first information about the RA is to be recorded; or
configuration information, wherein the configuration information is used to configure a format of the first information.

18. An information processing apparatus, comprising:
a sending unit configured to send first information about random access (RA), wherein the first information indicates one or more parameters of a feature combination requested by the RA initiated by a user equipment (UE).

19. An information processing apparatus, comprising:
a receiving unit configured to receive first information about random access (RA), wherein the first information indicates a user equipment to initiate one or more parameters of a feature combination requested by the RA initiated by a user equipment (UE).

20. A communication apparatus, comprising a processor and a memory, wherein the processor and the memory are connected to each other, the memory is configured to store a computer program, the computer program comprises a program instruction, and the processor is configured to execute the program instruction to execute the information processing method of any one of claims 1 to 9, or an information processing method of any one of claims 10 to 17.

21. A computer-readable storage medium, wherein the computer-readable storage medium is configured to store a computer program, and the computer program comprises a program instruction which, when executed, is configured for implementing the method of any one of claims 1 to 9 or the method of any one of claims 10 to 17.

22. A chip, wherein the chip comprises a processor, and the processor is configured to execute the method of any one of claims 1 to 9, or the method of any one of claims 10 to 17.

23. A chip module, wherein the chip module comprises a transceiver and a chip, the chip comprises a processor, and the processor is configured to execute the method of any one of claims 1 to 9, or the method of any one of claims 10 to 17.
